(19)

**Europäisches Patentamt**
**European Patent Office**
**Office européen des brevets**

(11) **EP 4 258 219 A1**

(12) **EUROPEAN PATENT APPLICATION**

(43) Date of publication:
**11.10.2023 Bulletin 2023/41**

(21) Application number: **22305479.2**

(22) Date of filing: **07.04.2022**

(51) International Patent Classification (IPC):
**G06T 15/50** (2011.01)    **G06T 19/00** (2011.01)
**G06T 19/20** (2011.01)

(52) Cooperative Patent Classification (CPC):
**G06T 15/506; G06T 19/006; G06T 19/20;**
G06T 2219/2012

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Beijing Xiaomi Mobile Software Co.,**
**Ltd.**
**Beijing 100000 (CN)**

(72) Inventors:
• **ANDRIVON, Pierre**
  **35340 LIFFRE (FR)**
• **LE LEANNEC, Fabrice**
  **35830 BETTON (FR)**
• **THOMAS, Emmanuel**
  **Beijing (CN)**
• **CHAMPEL, Mary-Luc**
  **35220 MARPIRE (FR)**

(74) Representative: **RVDB Rennes**
  **44 rue Lariboisière**
  **35235 Thorigné-Fouillard (FR)**

(54) **RENDERING OF AUGMENTED REALITY (AR) CONTENT AND METHOD FOR ENABLING AR CONTENT RENDERING**

(57)    The present application relates to a method implemented by an augmented reality, AR, device (500) for performing AR content rendering, the method comprising: transmitting, to an external processing device (502), encoded source video picture data representative of a video picture (PR1) of a real-world scene (OB1); receiving lighting information from the processing device (502); and generating an AR video picture (PR2) by aggregating the video picture (PR1) and volumetric information representative of a virtual object (OB2) into an aggregated video picture and by incorporating (404), into the aggregated video picture, relighting effects (SH2) associated with the virtual object (OB2) based on the received lighting information. A corresponding method implemented by a processing device (502) for enabling AR content rendering is also provided.

**Fig. 5**

**EP 4 258 219 A1**

**Description**

FIELD

The present application generally relates to augmented reality (AR) and to devices and methods for rendering, or enabling rendering, of AR video pictures. Particularly, but not exclusively, the present application concerns lighting effects applied in AR video pictures and processing involved for enabling such lighting effects.

BACKGROUND

The present section is intended to introduce the reader to various aspects of art, which may be related to various aspects of at least one exemplary embodiment of the present application that is described and/or claimed below. This discussion is believed to be helpful in providing the reader with background information to facilitate a better understanding of the various aspects of the present application. Accordingly, it should be understood that these statements are to be read in this light, and not as admissions of prior art. Augmented Reality (denominated hereafter "AR") might be defined as an experience where volumetric information representative of virtual object(s) (the "Augmented" part) is overlaid on top of a video picture representative of a user (3D) perceived real-word environment (the "Reality" part). Visual AR information, resulting from the combination of the video picture and the virtual information, can be displayed by means of various well-known AR devices, such as AR glasses, headsets or mobile devices.

The game Pokemon GO™ may be considered as one of the first massive deployments of a consumer AR service (in 2016). Since then, plenty of AR services have been widely spread in various fields, such as tourism, education, healthcare, navigation systems, construction, retail, etc.

In order to support various AR functions or services, AR devices may comprise multiple sensors (cameras, trackers, gyro, accelerometer...) and processing modules (codecs, vision engine, renderer...). For instance, according to 3GPP standardization committee working on AR services standardization and deployment over 5G, AR devices may be categorized in four types: "5G Standalone AR UE", "5G EDGe-Dependent AR UE", "5G Wireless Tethered AR UE" and "5G Wired Tethered AR UE" (XR over 5G presentation to VR-IF: https://www.vr-if.org/wp-content/uploads/VRIF-April-2021-Workshop-3GPP-SA4-presentation.pdf). Each AR device architecture may be adapted for a given use case or scenario as identified by 3GPP.

Although distribution technologies for carrying 3D-based models are investigated and being standardized for decades (H.264/MVC, H.265/MV-HEVC, 3D-HEVC, Google Draco, etc.), augmented, virtual and mixed reality (denoted respectively AR, VR and MR) are concepts only becoming mainstream nowadays with services and products on the market (AR glasses, headsets, etc.) thanks to different converging conditions. 5G is also seen as a principal vector for deploying XR-based (XR = AR/VR/MR) services in the consumer daily life. Maturity in 3D capture techniques was a strong supporter of this advent, especially those based on Point Cloud capture and Multiview plus depth.

A concept of AR technology is to insert visual (enhanced) information in a captured real-world environment. In particular, virtual objects may be inserted into a video picture of a real-world scene to obtain an AR video picture. To this end, lighting is a key aspect to provide a realistic experience to the user. Indeed, a virtual object overlaid on an environment with inappropriate lighting and shadows can break the immersion illusion: the object seems to float in the air or to not be actually part of the scene.

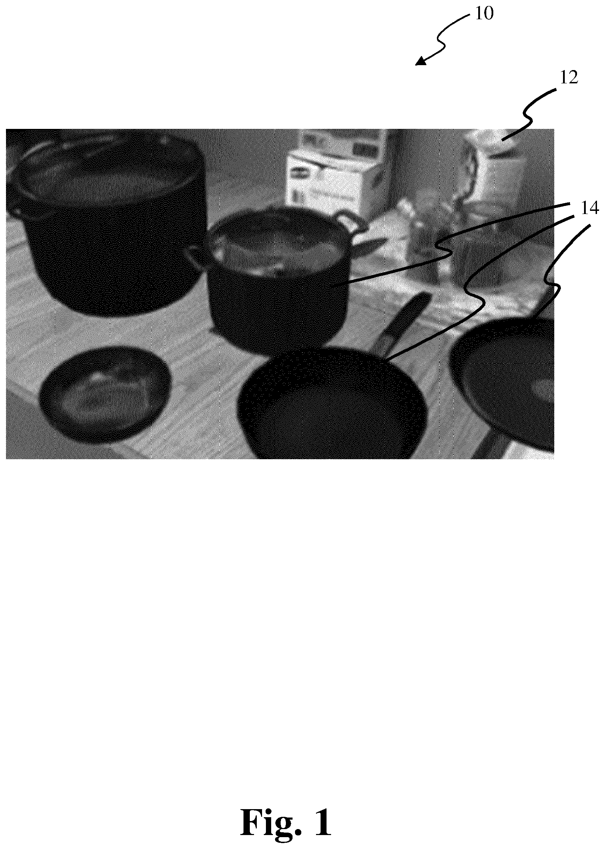

**Figure 1** shows for instance an AR video picture 10 obtained by inserting virtual objects 14 into a video picture 12 of a real-world scene. The virtual objects 14 may produce an undesirable impression of floating within their real-world surroundings, notably due to a poor lighting.

Proper relighting of the inserted virtual object is thus critical in order to provide an appropriate user experience. A non-relighted object lacking coherent shadows can break immersion and interest for commercial AR experiences.

Known methods of lighting estimation have been developed over the past few years for determining lighting information of the perceived or captured scene (in which the virtual object is inserted) so specific effects can be added to the virtual object for a graceful and smooth integration in the real-world environment. With the advent of Artificial Intelligence, learning based methods have also emerged.

However, a problem arises in that lighting estimation is not always supported by AR devices or is supported but in a limited non-satisfactory manner that may conduct to unrealistic rendering effects. In particular, reaching smooth experience with real-time processing is a challenge for AR devices, especially those with limited power resources such as AR devices implemented as mobile devices, tablets or headsets. Light estimation algorithms may require powerful resources even for pre-trained deep learning-based solutions. Processing power embedded in handled devices can be limited, and battery may be drained very rapidly by computing intensive tasks (autonomy loss), e.g., decoding or 3D scene processing or rendering.

Trade-off algorithms are thus implemented that can conduct to unrealistic effects detrimental to the user experience rather than enhancing the immersive scene.

There is thus a need for realistic AR content, and in particular for proper relighting of virtual objects in AR video pictures to ensure good and immersive user experience. In particular, optimal rendering quality of AR content is desirable for all AR devices.

SUMMARY

The following section presents a simplified summary of the at least one exemplary embodiment in order to provide a basic understanding of some aspects of the present application. This summary is not an extensive overview of an exemplary embodiment. It is not intended to identify key or critical elements of an exemplary embodiment. The following summary merely presents some aspects of the at least one exemplary embodiment in a simplified form as a prelude to the more detailed description provided elsewhere in the document.

According to a first aspect of the present application, there is provided a method implemented by an AR device (or AR apparatus) for performing AR content rendering, said method comprising:

- transmitting, to a processing device external to said AR device, encoded source video picture data representative of a video picture of a real-world scene;
- receiving lighting information from said processing device;
- generating an AR video picture by:

    ∘ obtaining an aggregated video picture by aggregating the video picture and volumetric information representative of at least one virtual object; and
    ∘ incorporating, into the aggregated video picture, relighting effects associated with the at least one virtual object based on the received lighting information and

- rendering said AR video picture.

In an exemplary embodiment, the lighting information and environmental map data are obtained by decoding a bitstream of encoded video picture data received from the processing device;
wherein the relighting effects incorporated into the aggregated video picture is determined by applying the lighting information and the environmental map data to the at least one virtual object inserted in the aggregated video picture.

In an exemplary embodiment, said incorporating relighting effects comprises at least one of:

- overlaying, on the at least one virtual object inserted into the aggregated video picture, reconstructed lighting determined based on the lighting information; and
- overlaying, on the aggregated video picture, shadow effects representing at least one reconstructed shadow of said at least one virtual object, said shadow effects being determined based on the lighting information.

In an exemplary embodiment, the volumetric information is obtained by any one of:

- receiving said volumetric information from a content server independently from the lighting information received from the processing device; and
- receiving said volumetric information, together with the lighting information, as part of a bitstream of encoded video picture data.

In an exemplary embodiment, the lighting information comprises at least one of the following characteristics of light in the source video picture:

- lighting direction;
- lighting intensity;
- lighting position;
- color temperature;
- light spectrum;
- light level; and
- ambient spherical harmonics.

According to a second aspect of the present application, there is provided a method implemented by a processing device (or processing apparatus) for enabling AR content rendering, said method comprising:

- receiving, from an AR device external to the processing device, encoded video picture data representative of a video picture of real-world scene;
- obtaining a video picture of a real-world scene by decoding the received encoded video picture data;
- determining lighting information by performing a light estimation based on the video picture; and
- transmitting, to the AR device, the lighting information for enabling AR rendering of the video picture.

In an exemplary embodiment, the method further comprises:

- obtaining spatial mapping data comprised in the encoded video picture data by decoding said encoded video picture data, said spatial mapping data defining a 3D coordinate system;

wherein the lighting information is determined based on the spatial mapping data so that the 3D coordinate system is shared by the processing device and the AR device.

In an exemplary embodiment, the method further comprises:

- obtaining environmental map data based on the source video picture, said environmental map data defining as an image a 3D view of estimated lighting; and
- encoding, as an encoded image, the environmental map data in a bitstream transmitted to the AR device.

In an exemplary embodiment, the method further comprises:

- obtaining illuminating information defining illumination applied by an illuminating device to the real-word scene for capturing the source video picture;

wherein the lighting information is determined based on the light illuminating information.

In an exemplary embodiment, the method further comprises:

- inserting the lighting information as metadata of a bitstream of encoded video picture data transmitted to the AR device.

In an exemplary embodiment, the lighting information comprises at least one of the following characteristics of light in the source video picture:

- lighting direction;
- lighting intensity;
- lighting position;
- color temperature;
- light spectrum;
- light level; and
- ambient spherical harmonics.

According to a third aspect of the present application, there is provided a bitstream of encoded processing data generated by one of the methods according to the second aspect of the present application.

In an exemplary embodiment, the lighting information is formatted in (or comprised in) a Supplemental Enhancement Information (SEI) message.

According to a fourth aspect of the present application, there is provided an AR apparatus (or AR device) for AR content rendering. The AR apparatus comprises means for performing any one of the methods according to the first aspect of the present application.

According to a fifth aspect of the present application, there is provided a processing apparatus (or processing device) for enabling AR content rendering. The processing apparatus comprises means for performing any one of the methods according to the second aspect of the present application.

According to a sixth aspect of the present application, there is provided a computer program product including instructions which, when the program is executed by one or more processors, causes the one or more processors to carry out any one of the methods according to the first aspect of the present application.

According to a seventh aspect of the present application, there is provided a non-transitory storage medium (or storing medium) carrying instructions of program code for executing any one of the methods according to the first aspect of the present application.

According to an eighth aspect of the present application, there is provided a computer program product including instructions which, when the program is executed by one or more processors, causes the one or more processors to carry out any one of the methods according to the second aspect of the present application.

According to a nineth aspect of the present application, there is provided a non-transitory storage medium (or storing medium) carrying instructions of program code for executing any one of the methods according to the second aspect of the present application.

The application allows graceful and smooth integration of virtual objects into a video picture of a real-world scene, thereby providing realistic and immersive AR experience to the user, irrespective of the resources available at the level of the AR device and/or for communication between the AR device and outside. Optimal rendering quality of AR content can thus be achieved, even by AR devices with limited processing resources, such as mobiles devices (AR googles, etc.). In particular, realistic lighting can be efficiently reconstructed in an AR video picture for the sake of realism. Accurate lighting estimation may for instance be achieved in real-time, without or with limited latency.

The specific nature of at least one of the exemplary embodiments as well as other objects, advantages, features and uses of said at least one of exemplary embodiments will become even more apparent from the following description of examples taken in conjunction with the accompanying drawings.

BRIEF DESCRIPTION OF THE DRAWINGS

Reference will now be made, by way of example, to the accompanying drawings which show exemplary embodiments of the present application, and in which:

Figure 1 shows an AR video picture generated in accordance with prior art;

Figure 2 shows a schematic block diagram of steps of a method 100 of encoding a video picture in accordance with prior art;

Figure 3 shows a schematic block diagram of steps of a method 200 of decoding a video picture in accordance with prior art;

Figure 4 illustrates a first method for rendering AR content;

Figure 5 illustrates a method for rendering AR content and a method for enabling AR content rendering, according to an exemplary embodiment of the present application;

Figure 6 shows a method for rendering AR content and a method for enabling AR content rendering, according to an exemplary embodiment of the present application;

Figure 7 illustrates a real-world scene and lighting estimation according to an exemplary embodiment of the present application;

Figure 8 illustrates various components of lighting according to an exemplary embodiment of the present application;

Figure 9 shows an AR video picture obtained according to an exemplary embodiment of the present application;

Figure 10 shows a schematic block diagram of an example of a system in which various aspects and exemplary embodiments are implemented; and

Figure 11 shows a schematic block diagram of an example of a system in which various aspects and exemplary embodiments are implemented.

Similar or same elements are referenced with the same reference numbers.

DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the present application is intended to cover all modifications, equivalents, and alternatives falling within the spirit and scope of the present application.

At least one of the aspects generally relates to video picture encoding and decoding, one other aspect generally relates to transmitting a bitstream provided or encoded and one other aspects relates to receiving/accessing a decoded bitstream.

At least one of the exemplary embodiments is described for encoding/decoding a video picture but extends to the encoding/decoding of video pictures (sequences of pictures) because each video picture may be sequentially encoded/decoded as described below.

Moreover, the at least one exemplary embodiments are not limited to MPEG standards such as AVC (ISO/IEC 14496-10 Advanced Video Coding for generic audio-visual services, ITU-T Recommendation H.264, https://www.itu.int/rec/T-REC-H.264-202108-P/en), EVC (ISO/IEC 23094-1 Essential video coding), HEVC (ISO/IEC 23008-2 High Efficiency Video Coding, ITU-T Recommendation H.265, https://www.itu.int/rec/T-REC-H.265-202108-P/en, VVC (ISO/IEC 23090-3 Versatile Video Coding, ITU-T Recommendation H.266, https://www.itu.int/rec/T-REC-H.266-202008-I/en) but may be applied to other standards and recommendations such as AV1 (AOMedia Video 1, http://aomedia.org/av1/specification/) for example. The at least one exemplary embodiment may apply to pre-existing or future-developed, and extensions of any such standards and recommendations. Unless indicated otherwise, or technically precluded, the aspects described in the present application may be used individually or in combination.

A pixel corresponds to the smallest display unit on a screen, which can be composed of one or more sources of light (1 for monochrome screen or 3 or more for colour screens).

A video picture, also denoted frame or picture frame, comprises at least one component (also called picture component, or channel) determined by a specific picture/video format which specifies all information relative to pixel values and all information which may be used by a display unit and/or any other device to display and/or to decode video picture data related to said video picture.

A video picture comprises at least one component usually expressed in the shape of an array of samples.

A monochrome video picture comprises a single component and a color video picture may comprise three components.

For example, a color video picture may comprise a luma (or luminance) component and two chroma components when the picture/video format is the well-known (Y,Cb,Cr) format or may comprise three color components (one for Red, one for Green and one for Blue) when the picture/video format is the well-known (R,G,B) format.

Each component of a video picture may comprise a number of samples relative to a number of pixels of a screen on which the video picture is intended to be display. For instance, the number of samples comprised in a component may be the same as, or a multiple (or fraction) of, a number of pixels of a screen on which the video picture is intended to be display.

The number of samples comprised in a component may also be a multiple (or fraction) of a number of samples comprised in another component of a same video picture.

For example, in the case of a video format comprising a luma component and two chroma components like the (Y,Cb,Cr) format, dependent on the color format considered, the chroma component may contain half the number of samples in width and/or height, relative to the luma component.

A sample is the smallest visual information unit of a component composing a video picture. A sample value may be, for example a luma or chroma value or a colour value of a (R, G, B) format.

A pixel value is the value of a pixel of a screen. A pixel value may be represented by one sample for monochrome video picture and by multiple co-located samples for color video picture. Co-located samples associated with a pixel mean samples corresponding to the location of a pixel in the screen.

It is common to consider a video picture as being a set of pixel values, each pixel being represented by at least one sample.

A block of a video picture is a set of samples of one component of the video picture. A block of at least one luma sample or a block of at least one chroma sample may be considered when the picture/video format is the well-known (Y,Cb,Cr) format, or a block of at least one color sample when the picture/video format is the well-known (R, G, B) format.

The at least one exemplary embodiment is not limited to a particular picture/video format.

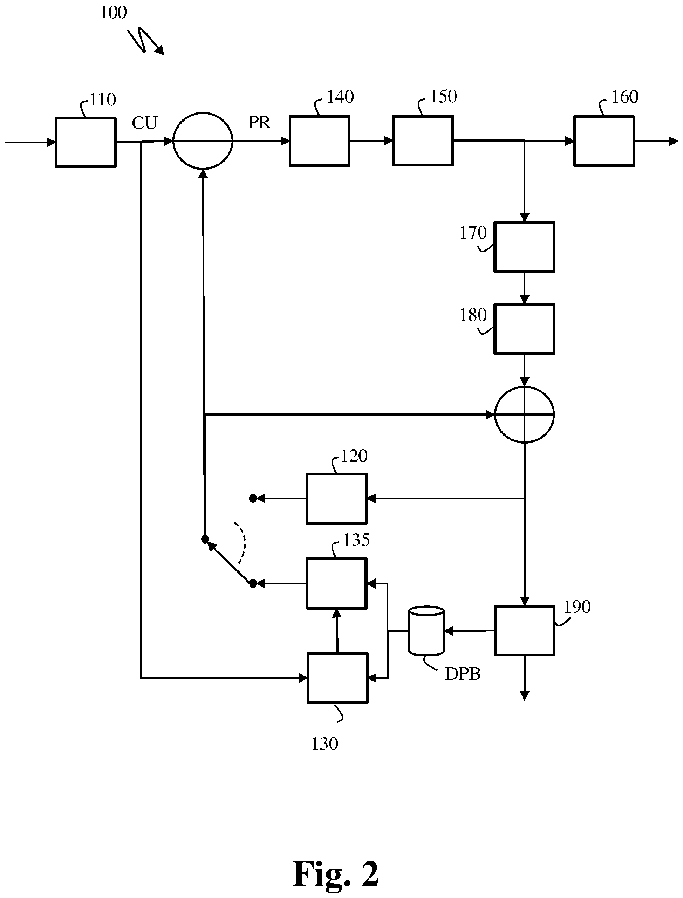

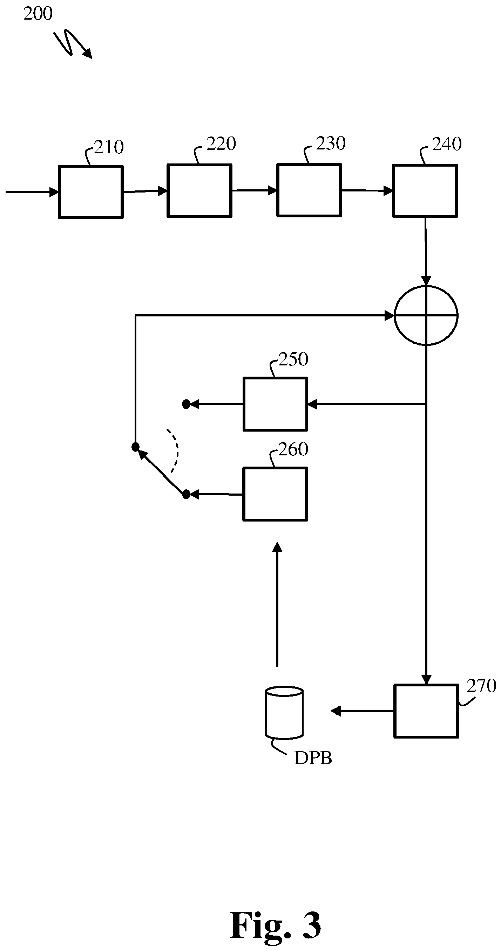

**Figures 2** and **3** provides an overview of video encoding/decoding methods used in current video standard compression systems like VVC for example. As indicated further below, these video encoding/decoding techniques, or any appropriate variants, may be used in the present application for the purpose of encoding/decoding. The present application is however not limited to these exemplary embodiments.

**Figure 2** shows a schematic block diagram of steps of a method 100 of encoding a video picture VP in accordance with prior art.

In step 110, a video picture VP is partitioned into blocks of samples and partitioning information data is signaled into a bitstream. Each block comprises samples of one component of the video picture VP. The blocks thus comprise samples of each component defining the video picture VP.

For example, in an HEVC, a picture is divided into Coding Tree Units (CTU). Each CTU may be further subdivided using a quad-tree division, where each leaf of the quad-tree is denoted a Coding Unit (CU). The partitioning information data may then comprise data defining the CTUs and the quad-tree subdivision of each CTU.

Each block of samples (CU), in short a block, is then encoded within an encoding loop using either an intra or inter prediction coding mode. The qualification "in loop" may also be assigned hereinafter to steps, functions or the like which are implemented within the a loop, i.e. an encoding loop at the encoding stage or a decoding loop at the decoding stage.

Intra prediction (step 120) consists in predicting a current block by means of a predicted block based on already encoded, decoded and reconstructed samples located around the current block within the picture, typically on the top and on the left of the current block. Intra prediction is performed in the spatial domain.

In inter prediction mode, motion estimation (step 130) and motion compensation (135) are performed. Motion estimation searches, in one or more reference video picture(s) used to predictively encode the current video picture, a candidate reference block that is a good predictor of the current block. For instance, a good predictor of the current block is a predictor which is similar to the current block. The output of the motion estimation step 130 is one or more motion vectors and reference picture index (or indices) associated to the current block. Next, motion compensation (step 135) obtains a predicted block by means of the motion vector(s) and reference picture index (indices) determined by the motion estimation step 130. Basically, the block belonging to a selected reference picture and pointed to by a motion vector may be used as the predicted block of the current block. Furthermore, since motion vectors are expressed in fractions of integer pixel positions (which is known as sub-pel accuracy motion vector representation), motion compensation generally involves a spatial interpolation of some reconstructed samples of the reference picture to compute the predicted block samples.

Prediction information data is signaled in the bitstream. The prediction information may comprise a prediction mode, prediction information coding mode, intra prediction mode or motions vector(s) and reference picture index (or indices) and any other information used for obtaining a same predicted block at the decoding side.

The method 100 selects one of the intra mode or inter coding mode by optimizing a rate-distortion trade-off taking into account the encoding of a prediction residual block calculated, for example, by subtracting a candidate predicted block from the current block, and the signaling of prediction information data required for determining said candidate predicted block at the decoding side.

Usually, the best prediction mode is given as being the prediction mode of a best coding mode p* for a current block given by:

$$p^* = \underset{p \in P}{\operatorname{Argmin}}\{RD_{cost}(p)\} \quad (1)$$

where $P$ is the set of all candidate coding modes for the current block, $p$ represents a candidate coding mode in that set, $RD_{cost}(p)$ is a rate-distortion cost of candidate coding mode p, typically expressed as:

$$RD_{cost(p)} = D(p) + \lambda . R(p) .$$

$D(p)$ is the distortion between the current block and a reconstructed block obtained after encoding/decoding the current block with the candidate coding mode $p$, $R(p)$ is a rate cost associated with the coding of the current block with coding mode $p$, and $\lambda$ is the Lagrange parameter representing the rate constraint for coding the current block and typically computed from a quantization parameter used for encoding the current block.

The current block is usually encoded from a prediction residual block PR. More precisely, a prediction residual block PR is calculated, for example, by subtracting the best predicted block from the current block. The prediction residual block PR is then transformed (step 140) by using, for example, a DCT (discrete cosine transform) or DST (Discrete Sinus transform) type transform or any other appropriate transform, and the obtained transformed coefficient block is quantized (step 150).

In variant, the method 100 may also skip the transform step 140 and apply quantization (step 150) directly to the prediction residual block PR, according to the so-called transform-skip coding mode.

Quantized transform coefficient block (or quantized prediction residual block) is entropy encoded into the bitstream (step 160).

Next, the quantized transform coefficient block (or the quantized residual block) is de-quantized (step 170) and inverse transformed (180) (or not) as part of the encoding loop, leading to a decoded prediction residual block. The decoded prediction residual block and the predicted block are then combined, typically summed, which provides the reconstructed block.

Other information data may also be entropy encoded in step 160 for encoding a current block of the video picture VP.

In-loop filters (step 190) may be applied to a reconstructed picture (comprising reconstructed blocks) to reduce compression artefacts. Loop filters may apply after all picture blocks are reconstructed. For instance, they consist in deblocking filter, Sample Adaptive Offset (SAO) or adaptive loop filter.

The reconstructed blocks or the filtered reconstructed blocks form a reference picture that may be stored into a decoded picture buffer (DPB) so that it can be used as a reference picture for the encoding of a next current block of the video picture VP, or of a next vide picture to encode.

**Figure 3** shows a schematic block diagram of steps of a method 200 of decoding a video picture VP in accordance with prior art.

In step 210, partitioning information data, prediction information data and quantized transform coefficient block (or quantized residual block) are obtained by entropy decoding a bitstream of encoded video picture data. For instance, this bitstream has been generated in accordance with the method 100.

Other information data may also be entropy decoded from the bitstream for decoding a current block of the video picture VP.

In step 220, a reconstructed picture is divided into current blocks based on the partitioning information. Each current block is entropy decoded from the bitstream within a decoding loop. Each decoded current block is either a quantized transform coefficient block or quantized prediction residual block.

In step 230, the current block is de-quantized and possibly inverse transformed (step 240), to obtain a decoded prediction residual block.

On the other hand, the prediction information data is used to predict the current block. A predicted block is obtained through its intra prediction (step 250) or its motion-compensated temporal prediction (step 260). The prediction process performed at the decoding side is identical to that of the encoding side.

Next, the decoded prediction residual block and the predicted block are then combined, typically summed, which provides a reconstructed block.

In step 270, in-loop filters may apply to a reconstructed picture (comprising reconstructed blocks) and the reconstructed blocks or the filtered reconstructed blocks form a reference picture that may be stored into a decoded picture buffer (DPB) as above discussed (**figure 1**).

Generally speaking, the present application relates to rendering of AR content and to data processing for enabling rendering of AR content. In particular, the present application involves an AR device for performing AR content rendering and a processing device for enabling AR content rendering, wherein the AR device and the processing device may cooperate with each other to achieve rendering of one or a plurality of AR video pictures.

A concept of the present application resides in incorporating relighting effects into an AR video picture rendered by an AR device, to increase the realism and rendering quality of the rendered AR content. To this end, a light estimation is performed by an external processing device, i.e., a processing device external to the AR device, to determine lighting information based on a video picture. The lighting information is transmitted to the AR device so that the latter can aggregate the video picture and volumetric information into an aggregated video picture and obtain an AR video picture by incorporating, into said aggregated video picture, relighting effects based on the received lighting information. In particular, relighting effects associated with one or more virtual objects defined by the volumetric information may be applied within the aggregated video picture based on the lighting information.

In an exemplary embodiment, there is provided a method implemented by an AR device for performing AR content rendering, said method comprising: transmitting, to a processing device external to said AR device encoded source video picture data representative of a video picture of a real-world scene; receiving light information from said processing device; and generating an AR video picture by: obtaining an aggregated video picture by aggregating the video picture and volumetric information representative of at least one virtual object; and incorporating, into the aggregated video picture, relighting effects associated with the at least one virtual object based on the received lighting information. The AR device may further render (e.g., displays) the AR video picture.

In an exemplary embodiment, there is provided a method implemented by a processing device for enabling AR content rendering, said method comprising: receiving, from an AR device external to the processing device, encoded video picture data representative of a video picture of real-world scene; obtaining a video picture of a real-world scene by decoding the received encoded video picture data; determining lighting information by performing a light estimation based on the video picture; and transmitting, to the AR device, the lighting information for enabling AR rendering of the video picture.

In the present application, lighting estimation which requires substantial processing resources is thus delegated to, or performed remotely by, a processing device external to the AR device in charge of rendering the final AR video picture.

The application allows graceful and smooth integration of virtual objects into a video picture of a real-world scene, thereby providing realistic and immersive AR experience to the user, irrespective of the resources available at the level of the AR device. Optimal rendering quality of AR content can thus be achieved, even by AR devices with limited processing resources, such as mobiles devices (AR googles, etc.). In particular, realistic lighting can be efficiently reconstructed in an AR video picture for the sake of realism.

Accurate lighting estimation may for instance be achieved in real-time, with no or limited latency. In particular, only partial processing delegation may be performed outside the AR device, that is, only part of the processing operations required for rendering the AR content may be delegated to an external processing device, including the lighting estimation for determining the lighting information. Other processing operations, such as aggregation of the video picture and the volumetric information as well as incorporation of relighting effects (as discussed above) may however be performed locally by the AR device to limit latency in communications between the AR device and the processing device and thus maximize AR rendering efficiency.

An optimal tradeoff can thus be achieved by this hybrid processing distribution between the AR device and a processing device to allow efficient and realistic AR content rendering even if the available bandwidth for communicating and the local resources in the AR device are limited.

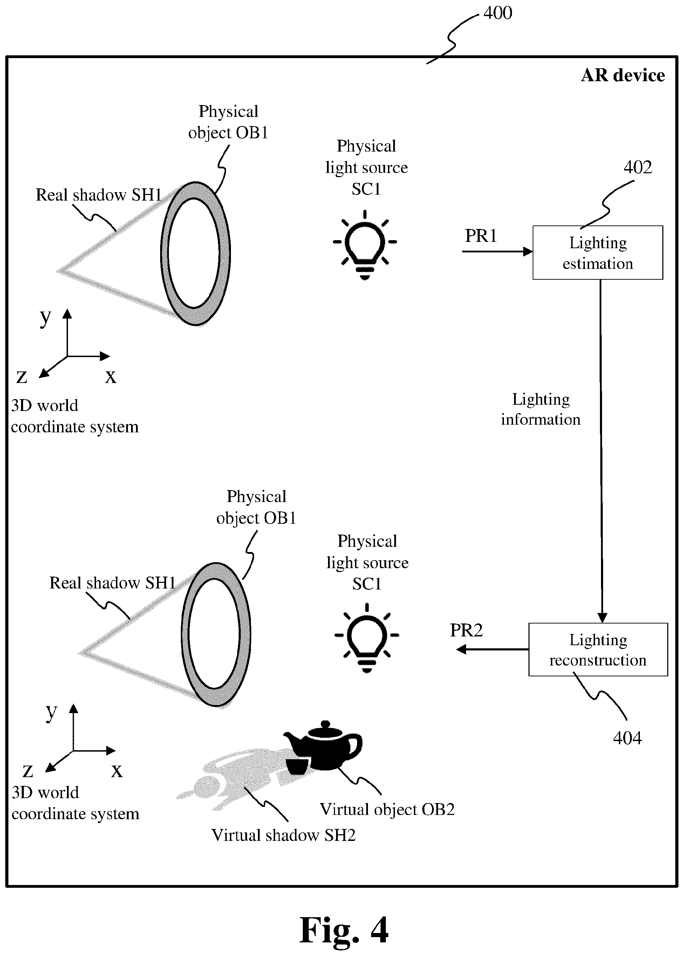

**Figure 4** shows by way of an example a first method where an AR device 400 performs lighting estimation (402) based on video picture PR1 (also called source video picture) of a real-world scene, e.g., of a physical object OB1 which may take any form. In this real-word scene, one or more physical light sources SC1 may cast light which alters the physical object OB1 represented by the video picture PR1. For instance, the video picture PR1 may represent, as part of the real-world scene, the physical object OB1 associated with a real shadow SH1 caused by a projection of light from a source light SC1 on the physical object OB1. Variants are also possible where the video picture PR1 represents a physical object OB1 without noticeable real shadow SH1.

As shown in **figure 4,** the AR device 400 may obtain lighting information (or light information) by performing the light estimation 402 based on the video picture PR1. The AR device 400 may further perform lighting reconstruction (404) based on the lighting information and the video picture PR1 to obtain an AR video picture PR2. More particularly, the AR device 400 may obtain an aggregated video picture by aggregating volumetric information representative of the virtual object OB2 with the video picture PR1 (so that the virtual object OB2 is inserted into the source video picture PR1), and perform the lighting reconstruction 404 by incorporating, into the aggregated video picture, relighting effects (or lighting effects) associated with the virtual object OB2 based on the lighting information obtained in 402, thereby obtaining an AR video picture PR2. The AR video picture PR2 may for instance include a virtual shadow SH2 of the virtual object OB2 as a result of the lighting reconstruction 404.

As can be seen, all the processing steps in the method of **figure 4,** including the lighting estimation 402, the aggregation of the volumetric information with the video picture PR1 as well as the incorporation of relighting effects, are performed locally by the AR device 400. As described earlier, this method may however be difficult to implement or may produce poor results, especially when the AR device 400 possesses limited local (or embedded) resources, or at least when it includes insufficient local resources to perform an appropriate lighting estimation.

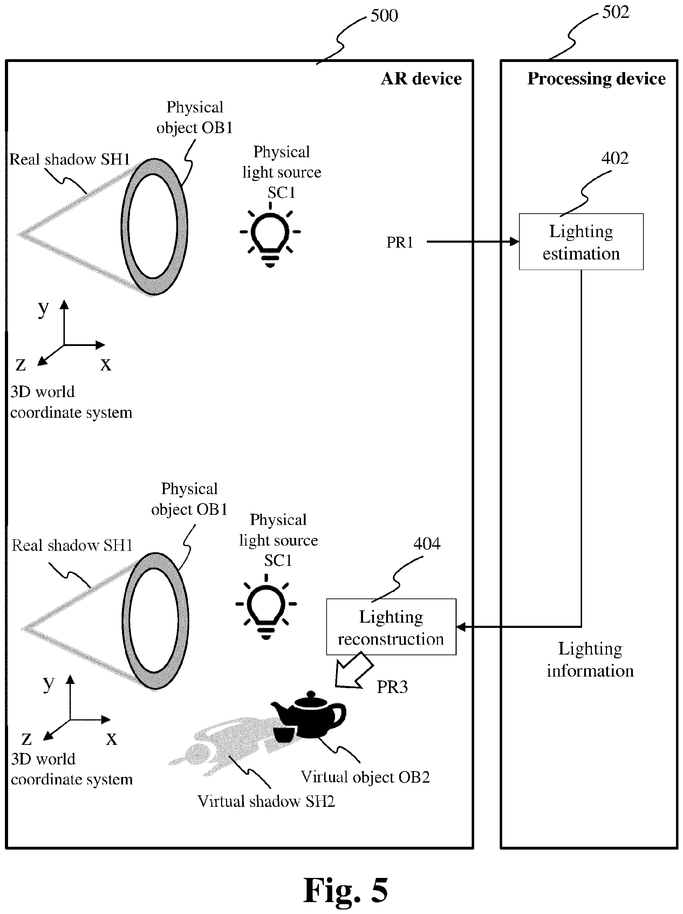

**Figure 5** shows an exemplary embodiment of the present application where an AR device 500, configured to perform AR content rendering, cooperates with an external processing device 502 configured to enable the AR device 500 to perform AR content rendering. As can be seen, a distinction of the embodiment of **figure 5** over the method of **figure 4** resides in that the lighting estimation 404 in **figure 5** is delegated to, i.e., performed remotely by, the external processing device 502.

More specifically, the AR device 500 obtains by any appropriate manner a video picture PR1 representative of a real-world scene (as previously described with reference to **figure 4**) and transmits this video picture PR1 to the processing device 502 which determines lighting information by performing the lighting estimation 402 based on the video picture PR1. The processing device 502 then transmits the lighting information to the AR device 500 which performs the lighting reconstruction 404 as previously described based on the lighting information. In particular, the AR device 500 may generate an AR video picture PR3 by aggregating the video picture PR1 and volumetric information representative of at least one virtual object OB2 to obtain an aggregated video picture and by incorporating, into the aggregated video picture, relighting (or lighting) effects associated with the virtual object OB2 based on the received lighting information.

As described in more detail in exemplary embodiments below, the relighting effects incorporated into the aggregated video picture to obtain the AR video picture PR3 may be adapted depending on each case.

Other aspects and advantages of the present application will be described below in particular exemplary embodiments, with reference to the figures.

It should be appreciated that the application may apply in the same manner to one or a plurality of source video pictures PR1, to obtain and deliver one or a plurality of AR video pictures PR3. Further, the real-world scene represented by a source video picture PR1 may be of various nature and may comprise one or a plurality of physical objects OB1, with or without real shadow(s) SH1, or possibly may not comprise any physical object as such (for instance only a background). Likewise, an AR video picture PR3 may be obtained by aggregating a (source) video picture with volumetric information representative of one or a plurality of virtual objects OB2 (also called volumetric objects OB2).

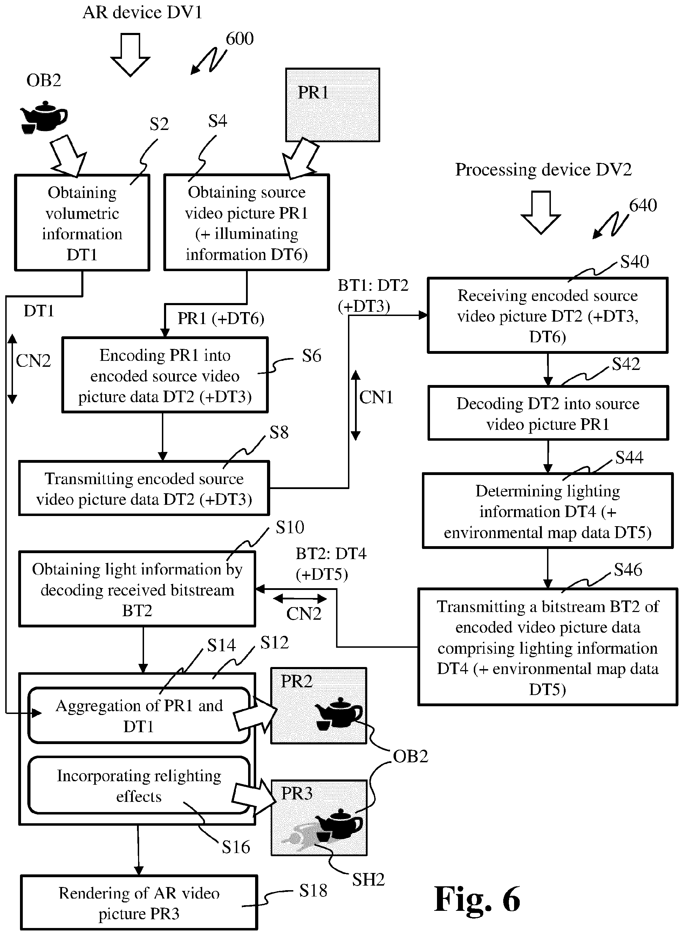

Particular exemplary embodiments of the present application will now be described with reference to **figures 6-11**. The exemplary embodiments described further below may be exemplary implementations of the embodiment of **figure 5**. In the following exemplary embodiments, it is assumed that an AR video picture PR3 is obtained based on a source video picture PR1 (also called video picture PR1) of a real-world scene. The source video picture PR1 is representative of the real-world scene and may comprise one or more physical (real) objects of that scene. It should be appreciated, however, that the present application may apply in the same manner to a plurality of source video pictures PR1, for instance video pictures PR1 of a stream of video data. In particular, the following embodiments may apply for rendering AR video pictures as a video sequence.

**Figure 6** shows a schematic block diagram of steps S2-S18 of a method 600 implemented by an AR device DV1 for performing AR content rendering and steps S40-S46 of a method 640 implemented by a processing device DV2 for enabling AR content rendering.

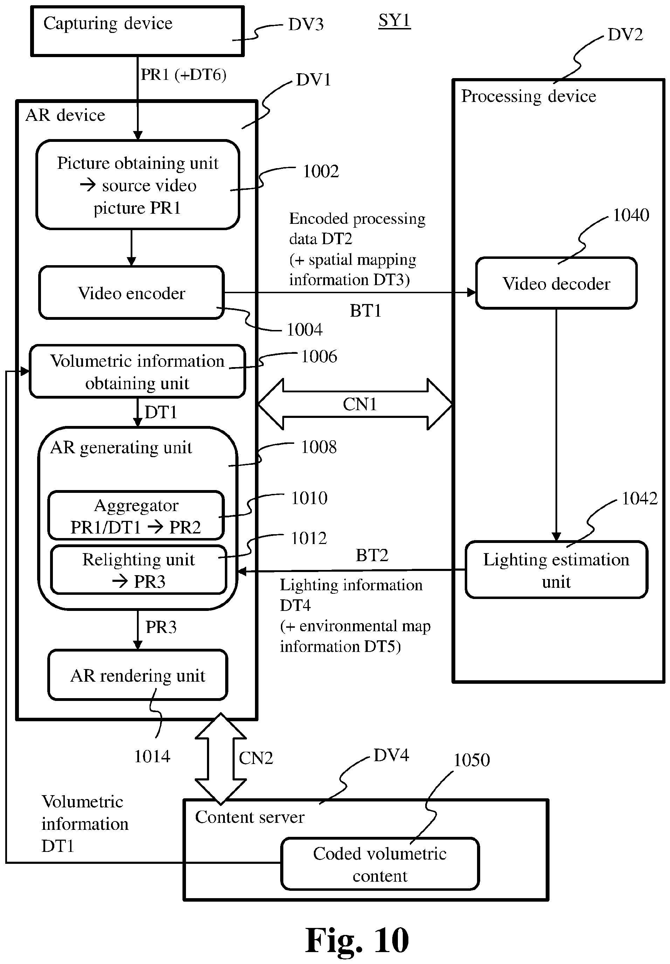

The AR device DV1 and processing device DV2 may take various forms as described further below and may correspond respectively to devices 500 and 502 of **figure 5**, for instance. Exemplary implementations of AR device DV1 and processing device DV2 are described hereafter with respect to **figures 10-11**.

The AR device DV1 and processing device DV2 cooperate with each other for allowing AR content rendering. To this end, a communication channel CN1 may be established between the AR device DV1 and processing device DV2. In other words, the processing device DV2 may be configured as an external tethered device with respect to the AR device DV1.

In an obtaining step S4 (**figure 6**), the AR device DV1 obtains a source video picture PR1 representative of a real-world scene (or real-world environment).

The real-world scene may be of various nature depending on each case and the source video picture PR1 may be of any appropriate format.

The source video picture PR1 may be obtained for instance by capturing (S4) the real-world scene as the source video picture PR1 by means of at least one capturing sensor embedded (or comprised locally) in the AR device DV1. A camera may for instance be used to capture the video picture PR1. In a variant, the AR device DV1 may receive (S4) the source video picture PR1 from a capturing device DV3 (**figure 10**) which captures the real-world scene as the source video picture PR1, for instance by means of a camera or any other capturing sensor. In a variant, the AR device DV1 retrieves (S4) the source video picture PR1 from a local memory, i.e., a memory comprised in the AR device DV1.

In an encoding step S6, the AR device DV1 encodes the source video picture PR1 of the real-world scene into encoded video picture data DT2. To this end, the AR device DV1 may use any appropriate encoding technique, such as an encoding method as described with reference to **figure 2** (method 100).

In a transmitting step S8, the AR device DV1 transmits the encoded video picture data DT2 to the processing device DV2. In this example, the transmission S8 is made in the form of an encoded bitstream BT1, for instance through a communication channel (or communication link) CN1 which may be a 5G link or any other appropriate channel, using for instance a communication network. 5G provides for low latency communications.

In an exemplary embodiment, in the encoding step S6, the AR device DV1 also encodes spatial mapping information DT3 with the encoded video picture data DT2. In this case, the spatial mapping information DT3 is thus sent (S8) with, or aside, encoded video picture data DT2 to the processing device DV2. The spatial mapping information DT3 defines a 3D coordinate system and may be used so that the AR device DV1 and the processing device DV2 share the same 3D space coordinates system, thereby allowing consistent lighting estimation to be achieved.

In a receiving step S40, the processing device DV2 receives the encoded video picture data DT2. The processing device DV2 then obtains (S42) the source video picture PR1 by decoding the received encoded video picture data DT2. Decoding may be performed by any appropriate manner, for instance by a decoding method as previously described with reference to **figure 3** (method 200).

The processing device DV2 may possibly also obtain (S42) the spatial mapping information DT3 (if any) by decoding the encoded source video picture data DT2.

In a determining step S44, the processing device determines lighting information (or light information) DT4 by performing a lighting estimation based on the source video picture PR1. Lighting estimation may be performed according to any known method, for instance by implementing a lighting estimation algorithm according to ARCore® (Google Play Services for AR) or ARKit®. For instance, a lighting estimator unit such as ARShadowGAN® (Generative Adversarial Network for shadow generation), GLEAM® (Ilumination Estimation Framework for Real-time Photorealistic Augmented Reality on Mobile Devices), DeepLight® (light source estimation for augmented reality using deep learning), etc. may be used.

The lighting information DT4 determined in S44 defines characteristics of light to which is exposed the real-world scene represented by the source video picture PR1. In other words, the lighting information DT4 characterizes light emanating from one or more physical light sources of the real-world scene.

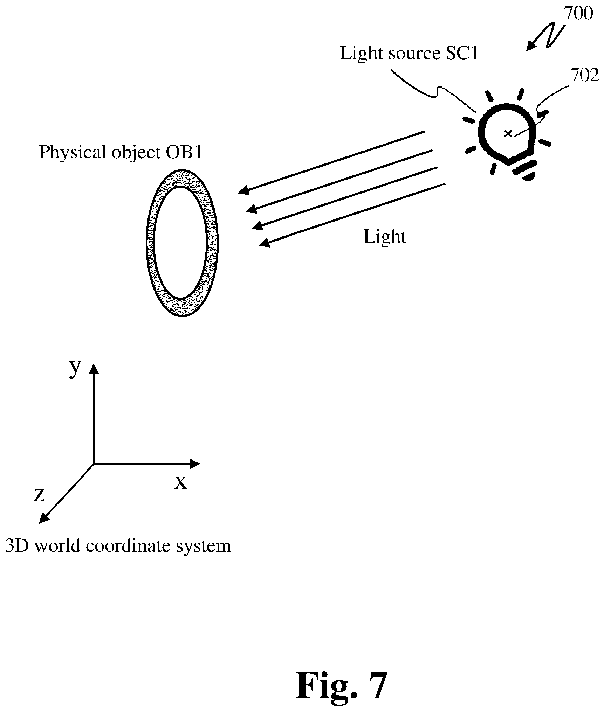

**Figure 7** is a schematic view representing by way of an example a physical light source SC1, i.e., a light source existing in the real world, that project (real) light on a physical object OB1 present in the real-world scene captured by the source video picture PR1. By performing lighting estimation S44, it is thus possible to determine one or multiple characteristics of the light emanating from the physical light source SC1.

The lighting information DT4 determined in S44 may comprise at least one of the following light characteristics (or any combination thereof): lighting direction, lighting intensity, lighting position, color temperature, light spectrum, light level, and ambient spherical harmonics.

The lighting information DT4 may be determined in S44 based on the spatial mapping information DT3 received (if any) from the AR device DV1 as part of the encoded video picture data DT2. In particular, as shown in **Figure 7,** the lighting position 702 of a physical light source SC1 may be defined in 3D space coordinates (representative of the real-world scene), for instance using the 3D space coordinates defined by the spatial mapping information DT3 (if any) received (S40) from the AR device DV1. This physical light source SC1 may be part of an illuminating device 700 (**figure 700**) which illuminates the real-world scene defined by source video picture PR1.

Ambient spherical harmonics may represent spherical harmonics coefficients for ambient illumination.

For instance, the lighting information DT4 may define a main directional light representing a main light source SC1 in the real-world scene and ambient spherical harmonics representing the remaining ambient light energy in the real-world scene. Determining a main directional light may for instance be used to cast shadows, as described further below.

In an exemplary embodiment, in determining step S44, the processing device DV2 also determines environmental map data DT5 based on the source video picture PR1. These environmental map data DT5 define as an image a 3D view of estimated lighting. Embodiments where such environmental map data are not used are also possible, however.

More specifically, the environmental map data DT5 define an environment map, i.e., a mapping image that represents an omnidirectional view of the environmental lighting of a 3D scene (the one represented in source video picture PR1) as seen from a particular 3D location. Every pixel in the mapping image corresponds to a 3D direction, and the data stored in the pixel represent the amount of light arriving from this direction. In 3D rendering applications, environmental maps may be used for image-based lighting techniques that approximate how objects are illuminated by their surroundings.

Environmental maps with enough dynamic range to represent even the brightest light sources in the environment are sometimes called "light probe images."

The environment map data DT5 may for instance represent the mapping image as a cubemap (or environmental cubemap, sometime also called HDR (high-dynamic range) cubemap), which is a way to encode 360-degree light information. In a cubemap, the environmental lighting is projected onto the six faces of an axis-aligned cube. The cube's faces are then arranged in a 2D image.

For instance, ARCore® (Google Play Services for AR) represents environment lighting using a cubemap. By using a cubemap, good performances for efficiently coding 360 video sequences can be achieved. However, any other 360 projections could be used such as equirectangular, fish-eye, cylindrical, etc. For instance, the environmental map can also be represented as "Latitude-Longitude Map" also known as equirectangular projection in 360 video domain.

The environment map data DT5, taking the form of a cubemap or the like as described above, can be advantageously used to recreate realistic lighting effect on virtual objects. It can be used in particular to render reflections in shiny metallic objects in AR content, as described further below.

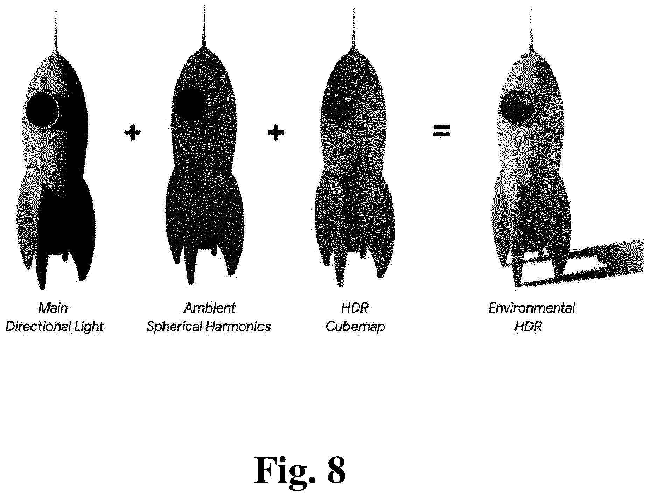

In an exemplary embodiment, the lighting information DT4 determined in S44 comprises a main directional light representing a main light source SC1 in the real-world scene, ambient spherical harmonics representing the remaining ambient light energy in the real-world scene and the environmental map data DT5 as previously described. **Figure** 8 illustrate the effects of these three components in a particular example.

To maximize AR content rendering quality, the three above components may be refreshed (determined) by the processing device DV2 every time a new source video picture PR1 (or video frame) is provided by the AR device DV1. As a result, the light direction information and the ambient spherical harmonics may become a timed sequence of metadata and the environmental map data DT5 may become a timed sequence of textures, i.e., a video sequence.

In a transmitting step S46, the processing device DV2 transmits, to the AR device DV1, the lighting information DT4 and possibly also the environmental map data DT5 (if any), to enable AR content rendering. This transmission may be performed for instance through the communication channel CN1 established between the AR device DV1 and the processing device DV2 (e.g., via a 5G link).

In an exemplary embodiment, the transmission S46 is made as a bitstream BT2 of encoded video picture data comprising the lighting information DT4, and possibly also the environmental map data DT5 (if any), in an encoded form. Encoding may be performed by any appropriate manner, such as an encoding method as previously described with reference to **figure 2** (method 100).

In an exemplary embodiment, the processing device DV2 inserts (S46) the lighting information DT4 as metadata of the bitstream BT2 of encoded video picture data prior to the transmission S46 to the AR device DV1. For instance, the lighting information DT4 is carried as metadata in a SEI (supplemental enhancement information) message of the bitstream BT2. Particular implementations for carrying the lighting information DT4 in the bitstream BT2 will be described further below.

In an exemplary embodiment, the environmental map data DT5 determined in S44 is also encoded (S46), as an encoded image, in the encoded bitstream BT2 of encoded video picture data prior to the transmission S46 to the AR device DV1.

It should be appreciated that the processing device DV2 does not return the source video picture PR1 to the AR device DV1 to avoid unnecessary data exchange and communication latency, since the AR device DV1 already possesses the source video picture PR1 (obtaining step S4). While waiting for reception of the bitstream BT2, the AR device DV1 may store the source video picture PR1 in a local memory.

In a receiving step S10, the AR device DV1 receives the lighting information DT4, and possibly also the environmental map data DT5 (if any), carried for instance by the encoded bitstream BT2 of encoded video picture data. More specifically, the AR device DV1 may obtain the lighting information DT4 and the environmental map data DT5 by decoding the bitstream BT2 of encoded video picture data received from the processing device DV2. Decoding may be performed in any appropriate manner, for instance according to a decoding method as previously described with reference to **figure 3** (method 200).

In a generating step S12, the AR device DV1 generates an AR video picture PR3 by performing an aggregation step S14 and an incorporating step S16, which are described further below in exemplary embodiments.

More specifically, in the aggregation step S14, an aggregated video picture PR2 is obtained by aggregating the source video picture PR1 and volumetric information DT1 representative of at least one virtual (or volumetric) object OB1. To this end, the processing device DV2 may parse the lighting information DT4 (and possibly any other information provided by the processing device DV2) to determine how the source video picture PR1 of the real-world scene is illuminated.

It is assumed in the present exemplary embodiment that the volumetric information DT1 represents a virtual object OB2 (**figure 6**) which is inserted (or integrated) into the source video picture PR1 to form the aggregated video picture PR2. The virtual object OB2 may be defined in any appropriate volumetric format by the volumetric information DT1.

The aggregation S14 causes the virtual object OB2 to be overlaid on (or integrated into) the source video picture PR1, thereby producing the aggregated video picture PR2 which forms AR content. In particular, the virtual object OB2 constitutes augmented content which is overlaid on top of the source video picture PR1 representative of a user perceived real-word environment.

To this end, the AR device DV1 may obtain (S2) the volumetric information DT1 in any appropriate manner. In an exemplary embodiment, the AR device DV1 receives (S2) the volumetric information DT1 from a content server DV4 (**figures 6** and **10**) independently from (without) the lighting information DT4 (e.g., independently from the encoded bitstream BT2), for instance via a second communication CN2 independent from the first communication channel CN1. The volumetric information DT1 may for instance be received (S2) from a content server DV4 distinct from the processing device DV2.

In an exemplary embodiment, the AR device DV1 receives (S2) the volumetric information DT1, together with the lighting information DT4, as part of the bitstream BT2 of encoded video picture data received in S10. In this case, it is thus the processing device DV2 which transmits the volumetric data DT1 to the AR device DV1.

In an exemplary embodiment, a content server DV4 transmits the volumetric data DT1 to the processing device DV2 which then encodes the received volumetric data DT1 together with the lighting information DT4 (and possibly also the environmental map data DT5, if any) into the bitstream BT2, prior to transmission to the AR device DV1. In this variant, the processing device DV2 serves thus as a relay to transfer the volumetric information DT1 to the AR device DV1.

In an exemplary embodiment, the AR device DV1 retrieves (S2) the volumetric information DT1 from a local memory of said AR device DV1.

Still as shown in **figure 6,** in the above-mentioned incorporating step S16, the AR device DV1 incorporates (or integrates), into the aggregated video picture PR2, relighting effects (or lighting effects, or reconstructed lighting) associated with the virtual object OB2 based on the received lighting information DT4, and possibly also based on the environmental map data DT5 (if any), thereby obtaining the AR video picture PR3. In other words, the AR video picture PR3 is obtained by applying (S16) relighting effects to the aggregated video picture PR2. These relighting effects are designed to alter the lighting within the AR content of the aggregated video picture PR2 to provide a more immersive and realistic experience to the user.

The relighting effects may be of different types and may comprise in particular at least one of (or any combination thereof): shadow effects; ambient lighting illumination; specular highlights; and light reflection.

The relighting effects incorporated (S16) into the aggregated video picture PR2 is determined by applying the lighting information DT4, and possibly the environmental map data DT5 (if any), to the virtual object OB2 inserted in the aggregated video picture PR2. The relighting effects are associated with the virtual object OB2 in the sense that they alter the lighting of the virtual object OB2 itself and/or alters the lighting of another region of the aggregated video picture PR2 as a result of a virtual shadow emanating from the virtual object OB2.

In an exemplary embodiment, incorporating S16 of the relighting effects comprises any one of (or both): overlaying, on the virtual object OB2 inserted into the aggregated video picture PR2, reconstructed lighting; and overlaying, on the aggregated video picture PR2, shadow effects representative of at least one reconstructed shadow SH2 of the virtual object OB2. The reconstructed lighting and the shadow effects are determined based on the lighting information DT4 (and possibly also based on the environmental map data DT5, if any).

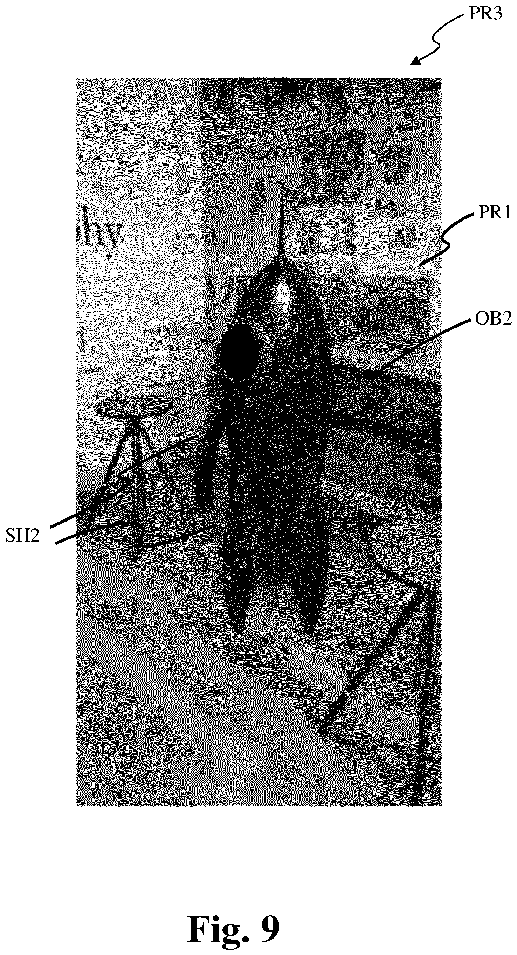

**Figure 9** illustrates generation of an AR video picture PR3 according to an exemplary embodiment. A virtual object OB2 (the rocket) is inserted into a source video picture PR1, and relighting effects are applied to the inserted virtual object OB2, i.e., light reflection and the like are added on the virtual object (e.g., on the upper end of the rocket) and a virtual shadow SH2 emanating from the virtual object OB2 is added in the background of the video picture. This virtual shadow SH2 is representative of a virtual exposition of the virtual object OB2 to real light within the real-world scene, i.e., light projected by a physical source SC1.

In a rendering step S18, the AR device DV1 renders the AR video picture PR3 by any appropriate means. The rendering may be performed by displaying the AR video picture PR3 (or by using any 3D projection or the like). In an exemplary embodiment, the AR device DV1 displays the AR video picture PR3 using a local display unit embedded in the AR device DV1. The display unit may take any appropriate form, such as AR google, headset for rendering AR content, a screen, etc.

The AR device DV1 may perform any appropriate computing for rendering the AR video picture PR3 as an AR content. In an exemplary embodiment, the AR device DV1 may send the AR video picture PR3 to an external display unit for displaying.

Various adaptations of the methods 600 and 640 may be encompassed in the present application, some of which will be described below by way of exemplary embodiments.

In an exemplary embodiment, the AR device DV1 obtains (S4, **figure 6**) illuminating information DT6 defining illumination (lighting) applied by an illuminating device for capturing the source video picture PR1 of the real-world scene. More specifically, an illuminating device (a lamp or other light source) can be used to physically illuminate the real-world scene captured as the source video picture PR1. The illuminating information DT6 characterizes how the real-world scene is illuminated by one or more physical source lights of the illuminating device. This illuminating device may be the illuminating device 702 illustrated in **figure 7** or part of the capturing device DV3 described further below with reference to **figure 10**.

The AR device DV1 may further encode (S6, **figure 6**) the illuminating information DT6 together with the source video picture PR1 and then the encoded source video picture data DT2 comprising the encoded source video picture PR1 is transmitted (S8) with, or aside, the encoded illuminating information DT6 to the processing device DV2, for instance as part of the encoded bitstream BT1. In other words, the illuminating information DT6 may be inserted into the bitstream BT1 prior to transmission to the processing device DV2. In a variant, the illuminated information DT6 is received by the processing device DV2 independently from the encoded bitstream BT1. In any case, the processing device DV2 may obtain the illuminating information DT6, for instance by decoding (S42) the encoded bitstream BT1 received from the AR device DV1, and determine the lighting information DT4 in the lighting estimation step S44 based on the illuminating information DT6 (as well as the source video picture PR1 and possibly also the spatial mapping information DT3, if any).

By using the illuminating information DT6 at the lighting estimation step S44, more accurate and efficient lighting estimation can be achieved.

The present application allows to increase the realism and rendering quality of the rendered AR content by only partially delegating (or externalizing) processing work to the processing device DV2, in particular the light estimation which requires significant processing and power resources, and which is not always supported locally by AR devices. However, to avoid latency and ensure efficient AR content rendering, a trade-off is reached by carrying out locally at the AR device level as much as possible of the required processing work, including the aggregation of real and virtual content as well as relighting reconstruction. While a solution may consist in having all the processing operations performed remotely by an external processing device DV2 (including aggregation and relighting), this could be detrimental to the quality of AR content rendering, notably because significant amount of data (corresponding to the aggregated video picture including relighting effects) would have to be transmitted over from the processing device DV2 to the AR device DV1, thereby requiring important bandwidth and communication resources. Besides, additional latency would be required by the additional processing. Thanks to the present application, limited amount of data is transmitted over from the processing device DV2 to the AR device DV1 since there is no need for the processing device DV2 to return data corresponding to source video picture PR1.

In an exemplary embodiment, the AR device DV1 determines its capacity to communicate with the processing device DV2, for instance over the communication channel CN1 (**figures 6** and **10**). If the communication capacity (e.g., available bandwidth) is above a threshold, then the AR device DV1 implements the method 600 to delegate the lighting estimation to the processing device DV2, and otherwise, the method 600 is not carried out. In case the communication capacity is below the threshold, the AR device DV1 may perform locally the lighting estimation S44 as previously described (**figures 6-9**).

Further, as previously described, lighting information DT4 may be transmitted (S46, figure 6) from a processing device DV2 to an AR device DV1 for enabling AR content rendering, according to exemplary embodiments of the present application. This lighting information DT4 may be signalled as metadata into the bitstream BT2 of encoded video picture data transmitted to the AR device DV1. An exemplary syntax for signalling lighting information may be as follows:

| lighting_information( payloadSize ) { | Descriptor |
|---|---|
| **li_lighting_id** | ue(v) |
| **li_sources_count_minus1** | u(v) |
| for(i = 0; i< li_sources_count_minus1; i++) | |
| **li_light-info_present-flag**[ i ] | u(1) |
| if( li_light_info_present_flag[ i ] ) { | |
| **li_light_type_id**[ i ] | u(5) |
| **li_color_temperature_idc**[ i ] | u(16) |
| } | |
| **li_cancel_flag**[ i ] | u(1) |
| if( ! li_cancel_flag[ i ] ) { | |
| **li_persistence_flag**[ i ] | u(1) |
| for( d = 0 ; d < 3; d++) | |
| **li_position**[ i ][d] | fl(32) |
| **li_rotation_qx**[ i ] | i(16) |
| **li_rotation_qy**[ i ] | i(16) |
| **li_rotation_qz**[ i ] | i(16) |
| **li_center_view_flag**[ i ] | u(1) |
| if( ! li_center_view_flag[ i ] ) | |
| **li_left_view_flag**[ i ] | u(1) |
| } | |
| } | |
| } | |

where:

**li-lighting_id** specifies an identifying number that may be used to identify a light or lighting set.

**li_sources_count_minus1** plus 1 indicates the number of light sources in the current SEI message.

**li-light_info_present_flag**[ i ] equal to 1 indicates that information on the i-th light source is present in the bitstream. li_light_info_present_flag[ i ] equal to 0 indicates that information on the i-th light source is not present in the bitstream.

**li_ligh_type_id**[ i ] indicates the light type of the i-th light source as listed in table below. The value of li_light_type_id[ i ] shall be in the range of 0 to 5, inclusive. Other values are reserved for future use.

| li_light_type_id | Type of light source |
|---|---|
| 0 | UNSPECIFIED |
| 1 | Natural light source (e.g. sun, star, moon...) |
| 2 | Incandescent lamp (traditional, halogen...) |
| 3 | Fluorescent lamp (incl. CFL) |
| 4 | Gas discharge lamp (incl. Sodium, Mercury...) |

(continued)

| li_light_type_id | Type of light source |
|---|---|
| 5 | Electro luminescence (incl. LED) |
| 6-31 | RESERVED |

**li_color_temperature_idc**[ i ], when in the range of 800 to 12200, inclusive, specifies the color temperature of the i-th light source, in units of Kelvin. When li_color_temperature_idc[ i ] is not in the range 800 to 12200, inclusive, the color temperature, is unknown or unspecified or specified by other means.

In an exemplary embodiment, intensity of the light source is indicated and expressed or represented in lumens or lumens per watt or lux or watts per square meter.

In an exemplary embodiment, the spectrum of the light source is indicated as a 2D table quantizing wavelength (in nm) and normalized intensity.

In an exemplary embodiment, corresponding white point and primaries of the light source are indicated (these data represent information characteristics of the light source such as represented on a display).

In an exemplary embodiment, colour temperature is not provided as such but a colour transform representative of white point change in the form of a 3x3 matrix with 9 coefficients indicated in the bitstream or an indicator specifying either transform coefficients or an external document specifying the conversion to apply. As a variant, colour temperature is rather signalled by white point coordinates (x,y) indicated by ( **li_white_point_x, li white_point_y** ) the normalized x and y chromaticity coordinates of the white point of the lighting source according to the CIE 1931 definition of x and y in ISO 11664-1. **li_position[ i ][ d ], li_rotation_qx[ i ], li_rotation_qy[ i ], li_rotation_qz[ i ], li_center_view_flag[ i ], li_left_view_flag[ i ]** syntax elements have the same semantics as matching elements in the viewport position SEI message of V-PCC except that it qualifies light source position (rather than viewport). Adopting a similar syntax and semantics improves readability and understanding of the specification.

In an exemplary embodiment, rotation syntax elements (li_rotation_qx/qy/qz), which may indicate direction, are not present but only 3D coordinates (li_position) are present.

In an exemplary embodiment, light source information is not present.

In an exemplary embodiment, light source position is not present.

In an exemplary embodiment, position is expressed in the AR glasses (2D) viewport coordinate system.

Lighting information data may be used by a process (e.g. renderer in the AR device) in order to relight and/or add shadows to the volumetric object inserted in the captured scene.

In an exemplary embodiment, ambient spherical harmonics coefficients are also carried in the bitstream BT2 of encoded video picture data (S46, **figure 6**). This may consist of an array of 9 sets of 3 RGB coefficients (i.e. 27 values).

| lighting_information( payloadSize ) { | Descriptor |
|---|---|
|   **li_lighting_id** | ue(v) |
|   **li_sources_count_minus1** | u(v) |
|   for(i = 0; i< li_sources_count_minus1; i++) | |
|     **li_ligh_info_present_flag**[ i ] | u(1) |
|     if( li_light_info_present_flag[ i ] ) { | |
|       **li_light_type_id**[ i ] | u(5) |
|       **li_color_temperature_idc**[ i ] | u(16) |
|     } | |
|     **li_cancel_flag**[ i ] | u(1) |
|     if( ! li_cancel_flag[ i ] ) { | |
|       **li_persistence_flag**[ i ] | u(1) |
|       for( d = 0 ; d < 3; d++) | |
|         **li_position**[ i ][d] | fl(32) |
|       **li_rotation_qx**[ i ] | i(16) |

(continued)

| | |
|---|---|
| **li_rotation_qy**[ i ] | i(16) |
| **li_rotation_qz**[ i ] | i(16) |
| **li_center_view_flag**[ i ] | u(1) |
| if( ! li_center_view_flag[ i ] ) | |
| **li left_view flag**[ i ] | u(1) |
| } | |
| } | |
| **li_ambient_spherical_harmonics_coeffs_p resent_flag** | u(1) |
| if( li_ambient_spherical_harmonics_coeffs_present_fla g ) | |
| for(i = 0; i< 9; i++) | |
| for(j = 0; j<3; j++) | |
| **li_ash_coeffs**[ i ][ j ] | u(32) |
| } | |
| } | |

where:

**li_ambient_spherical_harmonics_coeffs_present_flag** equal to 1 indicates that ambient spherical harmonics coefficients are present in the bitstream. When equal to 0, it indicates that ambient spherical harmonics coefficients are not present in the bitstream and values li_ash_coeffs[ i ][ j ] are inferred to be equal to 0.

**li_ash_coeffs**[ i ][ j ], when in the range of 0 to 1 000 000 000, inclusive, specifies the ambiant spherical harmonics coefficient of the i-th set of the j-th component (with j=0, 1 or 2 representing R, G or B respectively) in increments of 0. 000000001 units.

In an exemplary embodiment, the environmental HDR CubeMap is also carried in the bitstream BT2 of encoded video picture data (S46, **figure 6**; e.g. coded with VVC).

In computer graphics, environmental HDR CubeMap can be represented in an RGB linear light (i.e. colour component not gamma corrected/without OETF application) colorspace (possibly RGBA, with A being an alpha channel) and values are represented by 16-bit float (a.k.a half float). However, this format is not convenient for distribution networks and after computation/determination by the powerful computing device (e.g. edge-server or high-end smartphone), environmental HDR Cubemap possibly represented in RGB light linear half float should be converted to an HDR 10-bit format such as SMPTE ST 2084 R'G'B' or preferably ST 2084 Y'CbCr colorspace with 10-bit quantization. The 10-bit HDR Cubemap may thus be coded with a codec supporting signalling of Cubemap format such as HEVC or VVC with accompanying cubemap information coded in a Cubemap projection SEI message where possibly gcmp_face_index[ i ] is allocated as follows:

gmcp_face_index[0] = 0 (positive X)
gmcp_face_index[1] = 1 (negative X)
gmcp_face_index[2] = 5 (positive Y)
gmcp_face_index[3] = 4 (negative Y)
gmcp_face_index[4] = 3 (positive Z)
gmcp_face_index[5] = 2 (negative Z)

which correspond to the usual indexing of environmental HDR cube map. Transfer function (ST 2084) and color space (RGB or Y'CbCr) is documented in the HDR Cubemap stream (e.g., in Visual Usability Information or VUIs with syntax elements such as transfer_characteristics and matrix_coeffs). Lighting information SEI message described precedingly may accompany the HDR Cubemap stream as well.

Further, the present application also concerns an AR device DV1 and a processing device DV2 configured respectively to perform the methods 600 and 640 (**figures 6-9**), respectively. The AR device DV1 and the processing device DV2 may comprise suitable means (or units, or modules) configured to perform each step of the methods 600 and 640, respectively, according to any one of the exemplary embodiments of the present application. These devices may correspond for instance to respectively devices 500 and 502 as shown in **figure 5.**

Particular exemplary embodiments of the AR device DV1, processing device DV2 are described hereafter.

**Figure 10** shows an exemplary implementation of a system SY1 comprising an AR device DV1 and a processing device DV2 configured to cooperate with each other as previously described to allow AR content rendering. Reference is made in particular to the methods of the different exemplary embodiments shown in **figures 5-9**.

The AR device DV1 may be or comprise, for instance, AR google, a smartphone, a computer, a tablet, a headset for rendering AR content, etc., or any other suitable device or apparatus configured to perform steps of a method for rendering AR content, in accordance with any exemplary embodiment of the present application.

The AR device DV1 may comprise a picture obtaining unit 1002 for obtaining the source video picture PR1 (e.g., from a capturing device DV3) and a video encoder 1004 for encoding the source video picture PR1 (possibly together with the illuminating information DT1 and/or the spatial mapping information DT3) into the encoded bitstream BT1.

The AR device DV1 may also comprise a volumetric information obtaining unit 1006 for obtaining the volumetric information DT1 (i.e., by receiving said DT1 from the content server DV4, and possibly by decoding it, prior to aggregation of DT1 with PR1 in the AR aggregator 1010), an AR generating unit 1008 for generating the AR video picture PR3 and an AR rendering unit 1014 for rendering the AR video picture PR3. In particular, the AR generating unit 1008 may comprise an aggregator (or aggregating unit) 1010 for aggregating the source video picture PR1 with the volumetric information DT1 and a relighting unit 1012 for obtaining the AR video picture PR3 by incorporating relighting effects associated with the virtual object OB2 into the aggregated video picture PR2 based on the lighting information DT4.

Still as shown in **figure 10**, the processing device DV2 may be a high-end workstation or a mobile device, an edge processing unit, a server, etc. or any other suitable device or apparatus configured to perform steps of a method for enabling AR content rendering, in accordance with any exemplary embodiment of the present application.

The processing device DV2 may comprise a video decoder 1040 for decoding the encoded bitstream BT1 received from the AR device DV1 and a lighting estimation unit 1042 for performing a lighting estimation based on the source video picture PR1.

The capturing device DV3 is configured to capture a source video picture PR1 by means for instance of any appropriate capturing sensor. In an exemplary embodiment, the AR device DV1 and the capturing device DV3 form one and same device.

The content server DV4 may comprise storing means for obtaining/storing the volumetric information DT1.

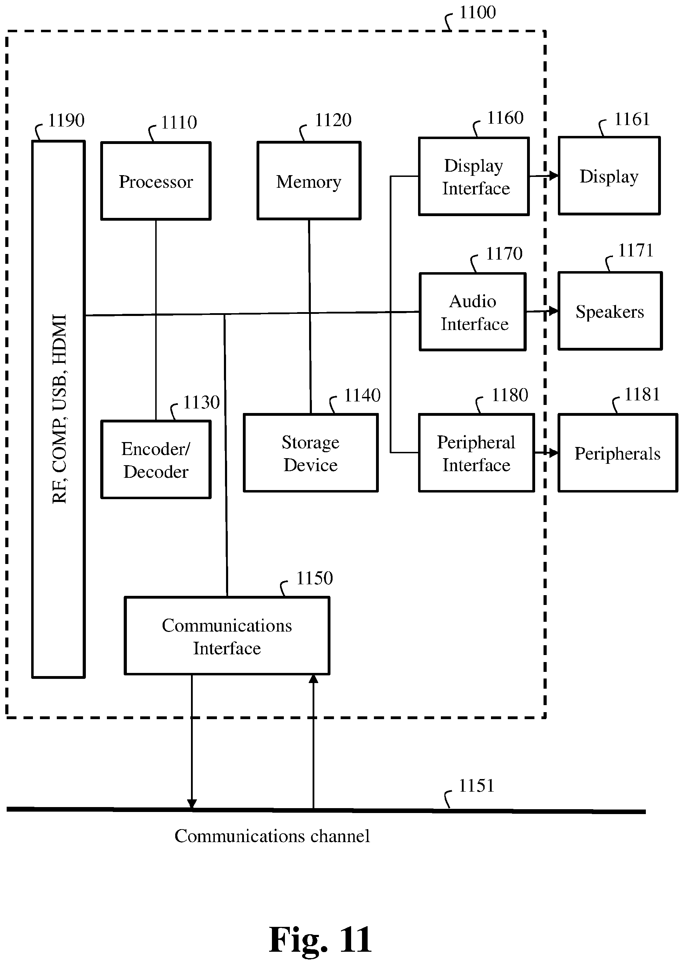

**Figure 11** shows a schematic block diagram illustrating an example of a system 1100 in which various aspects and exemplary embodiments are implemented.

System 1100 may be embedded as one or more devices including the various components described below. In various exemplary embodiments, system 1100 may be configured to implement one or more of the aspects described in the present application. For instance, the system 1100 is configured to perform either a method for rendering AR content or a method for enabling AR content rendering, according to any one of the previously described exemplary embodiments. The system 1100 may thus constitute an AR device or a processing device in the sense of the present application.

Examples of equipment that may form all or part of the system 1100 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, video servers (e.g. a broadcast server, a video-on-demand server or a web server), still or video camera, encoding or decoding chip or any other communication devices. Elements of system 1100, singly or in combination, may be embodied in a single integrated circuit (IC), multiple ICs, and/or discrete components. For example, in at least one exemplary embodiment, the processing and encoder/decoder elements of system 1100 may be distributed across multiple ICs and/or discrete components. In various exemplary embodiments, system 1100 may be communicatively coupled to other similar systems, or to other electronic devices, via, for example, a communications bus or through dedicated input and/or output ports.

System 1100 may include at least one processor 1110 configured to execute instructions loaded therein for implementing, for example, the various aspects described in the present application. Processor 1110 may include embedded memory, input output interface, and various other circuitries as known in the art. System 1100 may include at least one memory 1120 (for example a volatile memory device and/or a non-volatile memory device). System 1100 may include a storage device 1140, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 1140 may include an internal storage device, an attached storage device, and/or a network accessible storage device, as non-limiting examples.

System 1100 may include an encoder/decoder module 1130 configured, for example, to process data to provide encoded/decoded video picture data, and the encoder/decoder module 1130 may include its own processor and memory. The encoder/decoder module 1130 may represent module(s) or unit(s) that may be included in a device to perform the encoding and/or decoding functions. As is known, a device may include one or both encoding and decoding modules. Additionally, encoder/decoder module 1130 may be implemented as a separate element of system 1100 or may be incorporated within processor 1110 as a combination of hardware and software as known to those skilled in the art.

Program code to be loaded onto processor 1110 or encoder/decoder 1130 to perform the various aspects described in the present application may be stored in storage device 1140 and subsequently loaded onto memory 1120 for execution by processor 1110. In accordance with various exemplary embodiments, one or more of processor 1110, memory 1120, storage device 1140, and encoder/decoder module 1130 may store one or more of various items during the performance of the processes described in the present application. Such stored items may include, but are not limited to video picture data, information data used for encoding/decoding video picture data, a bitstream, matrices, variables, and intermediate or final results from the processing of equations, formulas, operations, and operational logic.

In several exemplary embodiments, memory inside of the processor 1110 and/or the encoder/decoder module 1130 may be used to store instructions and to provide working memory for processing that may be performed during encoding or decoding.

In other exemplary embodiments, however, a memory external to the processing device (for example, the processing device may be either the processor 1110 or the encoder/decoder module 1130) may be used for one or more of these functions. The external memory may be the memory 1120 and/or the storage device 1140, for example, a dynamic volatile memory and/or a non-volatile flash memory. In several exemplary embodiments, an external non-volatile flash memory may be used to store the operating system of a television. In at least one exemplary embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), AVC, HEVC, EVC, VVC, AV1, etc.

The input to the elements of system 1100 may be provided through various input devices as indicated in block 1190. Such input devices include, but are not limited to, (i) an RF portion that may receive an RF signal transmitted, for example, over the air by a broadcaster, (ii) a Composite input terminal, (iii) a USB input terminal, (iv) an HDMI input terminal, (v) a bus such as CAN (Controller Area Network), CAN FD (Controller Area Network Flexible Data-Rate), FlexRay (ISO 17458) or Ethernet (ISO/IEC 802-3) bus when the present invention is implemented in the automotive domain.

In various exemplary embodiments, the input devices of block 1190 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain exemplary embodiments, (iv) demodulating the down-converted and band-limited signal, (v) performing error correction, and (vi) demultiplexing to select the desired stream of data packets. The RF portion of various exemplary embodiments may include one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various exemplary embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various exemplary embodiments, the RF portion may include an antenna.

Additionally, the USB and/or HDMI terminals may include respective interface processors for connecting system 600 to other electronic devices across USB and/or HDMI connections. It is to be understood that various aspects of input processing, for example, Reed-Solomon error correction, may be implemented, for example, within a separate input processing IC or within processor 1110 as necessary. Similarly, aspects of USB or HDMI interface processing may be implemented within separate interface ICs or within processor 1110 as necessary. The demodulated, error corrected, and demultiplexed stream may be provided to various processing elements, including, for example, processor 1110, and encoder/decoder 1130 operating in combination with the memory and storage elements to process the data stream as necessary for presentation on an output device.

Various elements of system 1100 may be provided within an integrated housing. Within the integrated housing, the various elements may be interconnected and transmit data therebetween using suitable connection arrangement 1190, for example, an internal bus as known in the art, including the I2C bus, wiring, and printed circuit boards.

The system 1100 may include communication interface 1150 that enables communication with other devices via communication channel 1151. The communication interface 1150 may include, but is not limited to, a transceiver configured to transmit and to receive data over communication channel 1151. The communication interface 1150 may include, but is not limited to, a modem or network card and the communication channel 1151 may be implemented, for example, within a wired and/or a wireless medium.

Data may be streamed to system 1100, in various exemplary embodiments, using a Wi-Fi network such as IEEE 802.11. The Wi-Fi signal of these exemplary embodiments may be received over the communications channel 1151 and the communications interface 1150 which are adapted for Wi-Fi communications. The communications channel 1151 of these exemplary embodiments may be typically connected to an access point or router that provides access to outside networks including the Internet for allowing streaming applications and other over-the-top communications.

Other exemplary embodiments may provide streamed data to the system 1100 using a set-top box that delivers the data over the HDMI connection of the input block 1190.

Still other exemplary embodiments may provide streamed data to the system 1100 using the RF connection of the input block 1190.

The streamed data may be used as a way for signaling information, such as component conversion information DT1 (as described earlier), used by the system 1100. The signaling information may comprise the bitstream B and/or information such a number of pixels of a video picture and/or any coding/decoding setup parameters.

It is to be appreciated that signaling may be accomplished in a variety of ways. For example, one or more syntax elements, flags, and so forth may be used to signal information to a corresponding decoder in various exemplary embodiments.

System 1100 may provide an output signal to various output devices, including a display 1161, speakers 1171, and other peripheral devices 1181. The other peripheral devices 1181 may include, in various examples of exemplary embodiments, one or more of a stand-alone DVR, a disk player, a stereo system, a lighting system, and other devices that provide a function based on the output of system 1100.

In various exemplary embodiments, control signals may be communicated between the system 1100 and the display 1161, speakers 1871, or other peripheral devices 1181 using signaling such as AV.Link (Audio/Video Link), CEC (Consumer Electronics Control), or other communications protocols that enable device-to-device control with or without user intervention.

The output devices may be communicatively coupled to system 1100 via dedicated connections through respective interfaces 1160, 1170, and 1180.

Alternatively, the output devices may be connected to system 1100 using the communications channel 1151 via the communications interface 1150. The display 1161 and speakers 1171 may be integrated in a single unit with the other components of system 1100 in an electronic device such as, for example, a television.

In various exemplary embodiments, the display interface 1160 may include a display driver, such as, for example, a timing controller (T Con) chip.

The display 1161 and speaker 1171 may alternatively be separate from one or more of the other components, for example, if the RF portion of input 1190 is part of a separate set-top box. In various exemplary embodiments in which the display 1161 and speakers 1171 may be external components, the output signal may be provided via dedicated output connections, including, for example, HDMI ports, USB ports, or COMP outputs.

In **Figures 1-9,** various methods are described herein, and each of the methods includes one or more steps or actions for achieving the described methods. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium, such as storage device 1140 (**Figure 11**) for instance. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present exemplary embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing video pictures or other communication devices. As should be clear, the equipment may be mobile and even installed in a mobile vehicle.

Computer software may be implemented by the processor 1110 or by hardware, or by a combination of hardware and software. As a non-limiting example, the exemplary embodiments may be also implemented by one or more integrated circuits. The memory 1120 may be of any type appropriate to the technical environment and may be implemented using any appropriate data storage technology, such as optical memory devices, magnetic memory devices, semiconductor-based memory devices, fixed memory, and removable memory, as non-limiting examples. The processor 1110 may be of any type appropriate to the technical environment, and may encompass one or more of microprocessors, general purpose computers, special purpose computers, and processors based on a multi-core architecture, as non-limiting examples.

As will be apparent to one of ordinary skill in the art based on the present application, implementations may produce a variety of signals formatted to carry information that may be, for example, stored or transmitted. The information may include, for example, instructions for performing a method, or data produced by one of the described implementations. For example, a signal may be formatted to carry the bitstream of a described exemplary embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular exemplary embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" or "associated with" to another element, it may be directly responsive or connected to or associated with the other element, or intervening elements may be present. In contrast, when an element is referred to as being "directly responsive" or "directly connected" to or "directly associated with" other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of the present application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout the present application are not necessarily all referring to the same exemplary embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the present application are not necessarily all referring to the same exemplary embodiment/example/implementation, nor are separate or alternative exemplary embodiments/examples/implementations necessarily mutually exclusive of other exemplary embodiments/examples/implementations.

Reference numerals appearing in the claims are by way of illustration only and shall have no limiting effect on the scope of the claims. Although not explicitly described, the present exemplary embodiments/examples and variants may be employed in any combination or sub-combination.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this application, may encompass all or part of the processes performed, for example, on a received video picture (including possibly a received bitstream which encodes one or more video picture) in order to produce a final output suitable for display or for further processing in the reconstructed video domain. In various exemplary embodiments, such processes include one or more of the processes typically performed by a decoder. In various exemplary embodiments, such processes also, or alternatively, include processes performed by a decoder of various implementations described in the present application, for example,

As further examples, in one exemplary embodiment "decoding" may refer only to de-quantizing, in one exemplary embodiment "decoding" may refer to entropy decoding, in another exemplary embodiment "decoding" may refer only to differential decoding, and in another exemplary embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific description and is believed to be well understood by those skilled in the art.

Various implementations involve encoding. In an analogous way to the above discussion about "decoding", "encoding" as used in the present application may encompass all or part of the processes performed, for example, on an input video picture in order to produce an output bitstream. In various exemplary embodiments, such processes include one or more of the processes typically performed by an encoder. In various exemplary embodiments, such processes also, or alternatively, include processes performed by an encoder of various implementations described in this application.

As further examples, in one exemplary embodiment "encoding" may refer only to quantizing, in one exemplary embodiment "encoding" may refer only to entropy encoding, in another exemplary embodiment "encoding" may refer only to differential encoding, and in another exemplary embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, the present application may refer to "obtaining" various pieces of information. Obtaining the information may include one or more of, for example, estimating the information, calculating the information, predicting the information, or retrieving the information from memory, processing the information, moving the information, copying the information, erasing the information, calculating the information, determining the information, predicting the information, or estimating the information.

Additionally, this application may refer to "receiving" various pieces of information. Receiving the information may include one or more of, for example, accessing the information, or receiving information from a communication network.

Also, as used herein, the word "signal" refers to, among other things, indicating something to a corresponding decoder. For example, in certain exemplary embodiments the encoder signals a particular information such as coding parameter or encoded video picture data. In this way, in an exemplary embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various exemplary embodiments. It is to be appreciated that signaling may be accomplished in a variety of ways. For example, one or more syntax elements, flags, and so forth are used to signal information to a corresponding decoder in various exemplary embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method (600) implemented by an augmented reality, AR, device (500; DV1) for performing AR content rendering, said method comprising:

   - transmitting (S8), to a processing device external to said AR device (DV2), encoded source video picture data (DT2) representative of a video picture (PR1) of a real-world scene;
   - receiving (S10) lighting information (DT4) from said processing device;
   - generating (S14) an AR video picture (PR3) by:

     ◦ obtaining (S16) an aggregated video picture (PR2) by aggregating the video picture and volumetric information (DT1) representative of at least one virtual object (OB2); and
     ◦ incorporating (S18), into the aggregated video picture, relighting effects associated with the at least one virtual object based on the received lighting information (DT4); and

   - rendering (S18) said AR video picture.

2. The method of claim 1, wherein the lighting information (DT4) and environmental map data (DT5) are obtained (S10) by decoding a bitstream of encoded video picture data received from the processing device;
   wherein the relighting effects incorporated into the aggregated video picture is determined (S18) by applying the lighting information and the environmental map data to the at least one virtual object (OB2) inserted in the aggregated video picture (PR2).

3. The method of claims 1 or 2, wherein said incorporating (S16) relighting effects comprises at least one of:

   - overlaying, on the at least one virtual object (OB2) inserted into the aggregated video picture, reconstructed lighting determined based on the lighting information; and
   - overlaying, on the aggregated video picture (PR2), shadow effects representing at least one reconstructed shadow (SH2) of said at least one virtual object (OB2), said shadow effects being determined based on the lighting information.

4. The method of any one of claims 1 to 3, wherein the volumetric information is obtained (S2) by any one of:

- receiving said volumetric information from a content server independently from the lighting information received from the processing device; and
- receiving said volumetric information, together with the lighting information, as part of a bitstream of encoded video picture data.

5. A method (640) implemented by a processing device (502; DV2) for enabling augmented reality, AR, content rendering, said method comprising:

- receiving (S40), from an AR device (500; DV1) external to the processing device, encoded video picture data (DT2) representative of a video picture (PR1) of real-world scene;
- obtaining (S42) a video picture of a real-world scene by decoding the received encoded video picture data (DT2);
- determining (S44) lighting information (DT4) by performing a light estimation based on the video picture; and
- transmitting (S46), to the AR device, the lighting information (DT4) for enabling AR rendering of the video picture.

6. The method of claim 5, further comprising:

- obtaining (S42) spatial mapping data (DT3) comprised in the encoded video picture data (BT1) by decoding said encoded video picture data, said spatial mapping data defining a 3D coordinate system;

wherein the lighting information (DT4) is determined based on the spatial mapping data (DT3) so that the 3D coordinate system is shared by the processing device and the AR device.

7. The method of claims 5 or 6, further comprising:

- obtaining (S44) environmental map data (DT5) based on the source video picture (PR1), said environmental map data defining as an image a 3D view of estimated lighting; and
- encoding (S46), as an encoded image, the environmental map data in a bitstream transmitted to the AR device.

8. The method of any one of claims 5 to 7, further comprising:

- obtaining (S42) illuminating information (DT6) defining illumination applied by an illuminating device (700) to the real-word scene for capturing the source video picture;

wherein the lighting information (DT4) is determined based on the light illuminating information (DT6).

9. The method of any one of claims 5 to 8, further comprising:

- inserting (S46) the lighting information (DT4) as metadata of a bitstream of encoded video picture data transmitted to the AR device.

10. A bitstream (BT2) of encoded processing data, formatted to comprise lighting information (DT4) obtained from one of the methods claimed in any one of claims 5 to 9.

11. The bitstream (BT2) of claim 10, wherein the lighting information is formatted in a Supplemental Enhancement Information message.

12. An AR apparatus (500; DV1) for AR content rendering, the apparatus comprising means for performing one of the methods (600) claimed in any one of claims 1 to 4.

13. A processing apparatus (502; DV2) for enabling AR content rendering by an AR apparatus, the processing apparatus comprising means for performing one of the methods (640) claimed in any one of claims 5 to 9.

14. A computer program product including instructions which, when the program is executed by one or more processors, causes the one or more processors to carry out a method claimed in any one of claims 1 to 9.

15. A non-transitory storage medium carrying instructions of program code for executing a method claimed in any one of claims 1 to 9.

10

12

14

**Fig. 1**

100

**Fig. 2**

**Fig. 3**

**Fig. 4**

**Fig. 5**

AR device DV1

600

OB2

PR1

S2    S4

Obtaining
volumetric
information
DT1

Obtaining source
video picture PR1
(+ illuminating
information DT6)

Processing device DV2

640

DT1

DT1

PR1 (+DT6)

BT1: DT2
(+DT3)

S40

Receiving encoded source
video picture DT2 (+DT3,
DT6)

CN2

Encoding PR1 into
encoded source video
picture data DT2 (+DT3)

S6

CN1

S42

Decoding DT2 into source
video picture PR1

S8

Transmitting encoded source
video picture data DT2 (+DT3)

S44

Determining lighting
information DT4 (+
environmental map data DT5)

S10

Obtaining light information by
decoding received bitstream
BT2

BT2: DT4
(+DT5)

CN2

S46

Transmitting a bitstream BT2 of
encoded video picture data
comprising lighting information
DT4 (+ environmental map data
DT5)

S14  S12

Aggregation of PR1 and
DT1

PR2

OB2

Incorporating relighting
effects

PR3

S16

SH2

Rendering of AR video
picture PR3

S18

## Fig. 6

700

Light source SC1

702

Physical object OB1

Light

y

x

z

3D world coordinate system

# Fig. 7

Main
Directional Light
+
Ambient
Spherical Harmonics
+
HDR
Cubemap
=
Environmental
HDR

# Fig. 8

Fig. 9

SY1

Capturing device — DV3

PR1 (+DT6)

DV1

AR device

Picture obtaining unit
→ source video
picture PR1

— 1002

DV2

Processing device

Encoded processing
data DT2
(+ spatial mapping
information DT3)

Video encoder

BT1

— 1004

Volumetric information
obtaining unit

— 1006

DT1

AR generating unit

— 1008

Aggregator
PR1/DT1 → PR2

— 1010

Relighting unit
→ PR3

— 1012

BT2

Lighting information
DT4
(+ environmental map
information DT5)

PR3

AR rendering unit

1014

CN2

Volumetric
information
DT1

CN1

— 1040

Video decoder

— 1042

Lighting estimation
unit

DV4

1050

Content server

Coded volumetric
content

# Fig. 10

**Fig. 11**

Europäisches
Patentamt

European
Patent Office

Office européen
des brevets

# EUROPEAN SEARCH REPORT

Application Number

EP 22 30 5479

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SCHNEIDER MICHAEL ET AL: "Augmented reality based on edge computing using the example of remote live support", 2017 IEEE INTERNATIONAL CONFERENCE ON INDUSTRIAL TECHNOLOGY (ICIT), IEEE, 22 March 2017 (2017-03-22), pages 1277-1282, XP033091243, DOI: 10.1109/ICIT.2017.7915547 [retrieved on 2017-04-28] * abstract * * section IV. A * | 1-15 | INV. G06T15/50 G06T19/00 G06T19/20 |
| Y | KÁN PETER ET AL: "DeepLight: light source estimation for augmented reality using deep learning", VISUAL COMPUTER, vol. 35, no. 6-8, 1 June 2019 (2019-06-01) , pages 873-883, XP055981143, DE ISSN: 0178-2789, DOI: 10.1007/s00371-019-01666-x Retrieved from the Internet: URL:https://link.springer.com/content/pdf/ 10.1007/s00371-019-01666-x.pdf> * abstract * * sections 1, 5; figure 7 * | 1-15 | |
| | ----- | | TECHNICAL FIELDS SEARCHED (IPC) |
| | -/-- | | G06T |

The present search report has been drawn up for all claims

| Place of search | Date of completion of the search | Examiner |
|---|---|---|
| Berlin | 17 November 2022 | Gao, Miao |

EPO FORM 1503 03.82 (P04C01)

page 1 of 2

## EUROPEAN SEARCH REPORT

Application Number

EP 22 30 5479

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | GARDNER MARC-ANDRÉ ET AL: "Learning to predict indoor illumination from a single image", ACM TRANSACTIONS ON GRAPHICS, vol. 36, no. 6, 20 November 2017 (2017-11-20), pages 1-14, XP055981146, US ISSN: 0730-0301, DOI: 10.1145/3130800.3130891 Retrieved from the Internet: URL:https://arxiv.org/pdf/1704.00090.pdf> * abstract * * section 8.2; figures 7, 16 * ----- | 1-15 | |

| | |
|---|---|
| | TECHNICAL FIELDS SEARCHED (IPC) |

The present search report has been drawn up for all claims

| Place of search | Date of completion of the search | Examiner |
|---|---|---|
| Berlin | 17 November 2022 | Gao, Miao |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.............................................................................
& : member of the same patent family, corresponding document

EPO FORM 1503 03.82 (P04C01)